(19)

Europäisches Patentamt

European Patent Office

Office européen des brevets

(11) **EP 4 276 932 A1**

(12) **EUROPEAN PATENT APPLICATION**

(43) Date of publication:
**15.11.2023 Bulletin 2023/46**

(21) Application number: **23165628.1**

(22) Date of filing: **30.03.2023**

(51) International Patent Classification (IPC):
$H01M\ 4/04^{(2006.01)}$    $H01M\ 4/62^{(2006.01)}$
$H01M\ 10/0525^{(2010.01)}$    $H01M\ 10/0567^{(2010.01)}$
$H01M\ 50/403^{(2021.01)}$    $H01M\ 50/409^{(2021.01)}$
$H01M\ 50/443^{(2021.01)}$

(52) Cooperative Patent Classification (CPC):
**H01M 50/409; H01M 4/0404; H01M 4/62;**
**H01M 10/0525; H01M 10/0567; H01M 50/403;**
**H01M 50/443**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.03.2022 JP 2022055779**
**29.03.2023 KR 20230041587**

(71) Applicant: **Samsung SDI Co., Ltd.**
**Yongin-si, Gyeonggi-do 17084 (KR)**

(72) Inventors:
• **BAEK, Jinseok**
**Yokohama-shi (JP)**
• **FUKATANI, Tomoyuki**
**Yokohama-shi (JP)**

(74) Representative: **Marks & Clerk LLP**
**15 Fetter Lane**
**London EC4A 1BW (GB)**

(54) **ENDOTHERMIC PARTICLES FOR NON-AQUEOUS ELECTROLYTE RECHARGEABLE BATTERY AND NON-AQUEOUS ELECTROLYTE RECHARGEABLE BATTERY**

(57) The endothermic particles for the non-aqueous electrolyte rechargeable battery are at least partially modified metal hydroxide particles, wherein an amount of desorbed $CH_4$ (MS1) from about 80 °C to about 1400 °C by thermal desorption gas mass spectrometry (TDS-MS) of the metal hydroxide particles is greater than or equal to about $15 \times 10^{-6}$ mol/g and less than or equal to about $3000 \times 10^{-6}$ mol/g, an amount of desorbed CHsOH (MS2) from about 80 °C to about 1400 °C by TDS-MS is greater than or equal to about $15 \times 10^{-6}$ mol/g and less than or equal to about $6000 \times 10^{-6}$ mol/g, an amount of desorbed $H_2O$ (MS3) from about 80 °C to about 200 °C by TDS-MS is greater than or equal to about $30 \times 10^{-6}$ mol/g and less than or equal to about $1500 \times 10^{-6}$ mol/g, a specific surface area (BET1) calculated by the adsorption isotherm measured by adsorbing water vapor is greater than or equal to about 8 m²/g and less than or equal to about 600 m²/g, and a specific surface area (BET2) of the metal hydroxide particles calculated by an adsorption isotherm measured by adsorbing nitrogen to the metal hydroxide particles is greater than or equal to about 8 m²/g and less than or equal to about 600 m²/g.

FIG. 1

EP 4 276 932 A1

**Description**

## BACKGROUND OF THE INVENTION

**(a) Field of the Invention**

The present disclosure relates to endothermic particles for a non-aqueous electrolyte rechargeable battery and a non-aqueous electrolyte rechargeable battery.

**(b) Description of the Related Art**

Non-aqueous electrolyte rechargeable batteries including rechargeable lithium ion batteries are widely used as power sources for smart phones, notebook computers, and the like, and recently are also used for large-sized batteries such as those for vehicles. On the other hand, the rechargeable lithium ion batteries have advantages of high energy density, but since they use non-aqueous electrolytes, sufficient measures are required for safety. However, with the recent increase in the size of batteries, securing safety has become more important.

For example, when a rechargeable lithium ion battery is placed in a high-temperature environment, there is a possibility that the positive electrode of the rechargeable lithium ion battery generates heat and the internal temperature of the battery rises. When the internal temperature becomes high, a short circuit due to shrinkage of the separator included in the rechargeable lithium ion battery is likely to occur. As a result, there is a possibility that the internal temperature may further rise.

Therefore, in order to ensure the safety of the rechargeable lithium ion battery, it has been proposed to include inorganic particles such as metal hydroxide particles having heat-absorption properties as endothermic particles in the rechargeable lithium ion battery to suppress an increase in internal temperature.

For example, Patent Document 1 discloses that endothermic and basic inorganic particles having a specific surface area ratio by adsorption of water vapor and nitrogen gas of greater than or equal to about 0.45 and less than or equal to about 2.0 are included in a separator as endothermic particles to improve battery safety.

In addition, Patent Documents 2 and 3, respectively, disclose that endothermic particles having a maximum endothermic peak temperature in DSC of greater than or equal to about 270 °C and less than or equal to about 360 °C, and a dehydration reaction temperature range of greater than or equal to about 200 °C and less than or equal to about 400 °C are included in an electrolyte or separator.

[Prior Art Documents]

[Patent Documents]

 (Patent Document 1) Japanese Patent No. 6925368
 (Patent Document 2) Japanese Unexamined Patent Publication No. 2016-162528
 (Patent Document 3) Japanese Patent No. 4364940

## SUMMARY OF THE INVENTION

However, according to the study of the present inventors, it is known that there are cases where the internal temperature of the non-aqueous electrolyte rechargeable battery cannot be sufficiently suppressed by the endothermic particles described in Patent Document 1.

Also, in the temperature ranges described in Patent Documents 2 and 3, melting of the separator included in the non-aqueous electrolyte rechargeable battery and decomposition of the charged positive electrode occur.

The present invention has been made in view of the above-described problems, and provides endothermic particles capable of suppressing an increase in the internal temperature of a non-aqueous electrolyte rechargeable battery even under an environment in which the internal temperature is likely to increase due to battery abnormalities such as internal short circuits.

As a result of repeated intensive studies by the present inventors to solve the aforementioned problems, in order to suppress the increase in the internal temperature of the non-aqueous electrolyte rechargeable battery, the present invention has been completed only after deriving that it is very important to make a degree of modification of carbon-containing functional groups on the surface of endothermic particles to be contained in non-aqueous electrolyte rechargeable batteries within an appropriate range.

That is, the endothermic particles for the non-aqueous electrolyte rechargeable battery according to an embodiment are at least partially modified metal hydroxide particles,

wherein an amount of desorbed $CH_4$ (MS1) from about 80 °C to about 1400 °C by thermal desorption gas mass spectrometry (TDS-MS) of the metal hydroxide particles is greater than or equal to about $15 \times 10^{-6}$ mol/g and less than or equal to about $3000 \times 10^{-6}$ mol/g,

in the metal hydroxide particles, an amount of desorbed CHsOH (MS2) from about 80 °C to about 1400 °C by TDS-MS is greater than or equal to about $15 \times 10^{-6}$ mol/g and less than or equal to about $6000 \times 10^{-6}$ mol/g,

in the metal hydroxide particles, an amount of desorbed $H_2O$ (MS3) from about 80 °C to about 200 °C by TDS-MS is greater than or equal to about $30 \times 10^{-6}$ mol/g and less than or equal to about $1500 \times 10^{-6}$ mol/g,

a specific surface area (BET1) calculated by the adsorption isotherm measured by adsorbing water vapor is greater than or equal to about 8 $m^2$/g and less than or equal to about 600 $m^2$/g, and

a specific surface area (BET2) of the metal hydroxide particles calculated by an adsorption isotherm measured by adsorbing nitrogen to the metal hydroxide particles is greater than or equal to about 8 $m^2$/g and less than or equal to about 600 $m^2$/g.

According to the endothermic particles for the non-aqueous electrolyte rechargeable battery configured as described above, a degree of modification of carbon-containing functional groups on the surface of the endothermic particles, which is defined not only by the specific surface area but also by the amount of desorption of various gases, is set within an appropriate range and thus when the endothermic particles are included in a non-aqueous electrolyte rechargeable battery, an increase in the internal temperature of non-aqueous electrolyte rechargeable battery can be suppressed in the event of an abnormality.

A specific surface area ratio (BET1/BET2) of the endothermic particles may satisfy Formula (1).

$$0.2 \leq (BET1 / BET2) \leq 4.0 \qquad (1)$$

A desorption gas amount ratio {(MS1+ MS2)/MS3} of the endothermic particles may satisfy Formula (2).

$$1.0 \leq \{(MS1 + MS2) / MS3\} \leq 10.0 \qquad (2)$$

An amount of desorbed $P_2$ of the endothermic particles from about 80 °C to about 1400 °C by TDS-MS may be greater than or equal to about $5 \times 10^{-6}$ mol/g and less than or equal to about $5000 \times 10^{-6}$ mol/g.

An amount of desorbed $C_6H_6$ of the endothermic particles from about 80 °C to about 1400 °C by TDS-MS may be greater than or equal to about $10 \times 10^{-6}$ mol/g and less than or equal to about $5000 \times 10^{-6}$ mol/g.

The endothermic particles may be modified with a surface treatment agent.

Examples of the surface treatment agent may include a silane coupling agent, a titanate-based coupling agent, an aluminate-based coupling agent, a fatty acid surface treatment agent, a phosphonic acid, or a combination thereof.

A maximum endothermic peak temperature in the differential scanning calorimetry of the endothermic particles may be greater than or equal to about 60 °C and less than or equal to about 300 °C.

The metal hydroxide particles may include aluminium hydroxide, pseudo-boehmite, boehmite, alumina, kaolinite, or a combination thereof.

According to another embodiment, a non-aqueous electrolyte rechargeable battery includes the endothermic particles for the non-aqueous electrolyte rechargeable battery in at least one of a positive electrode, a negative electrode, a separator, and a non-aqueous electrolyte in a range of greater than or equal to about 0.01 wt% and less than or equal to about 10.0 wt% based on a total weight, 100 wt%, of the non-aqueous electrolyte rechargeable battery.

At least some of the above and other features of the invention are set out in the claims.

According to the present invention, the degree of modification by carbon-containing functional groups of endothermic particles is set within an appropriate range according to the amount of desorption of carbon-containing gas as well as the specific surface area, and thus when included in a non-aqueous electrolyte rechargeable battery, it is possible to suppress an increase in the internal temperature of the non-aqueous electrolyte rechargeable battery due to a battery abnormality such as an internal short circuit.

In addition, by suppressing the increase in internal temperature, deterioration of the battery caused by the increase in internal temperature may be suppressed, and as a result, the cycle-life may be improved.

## BRIEF DESCRIPTION OF THE DRAWINGS

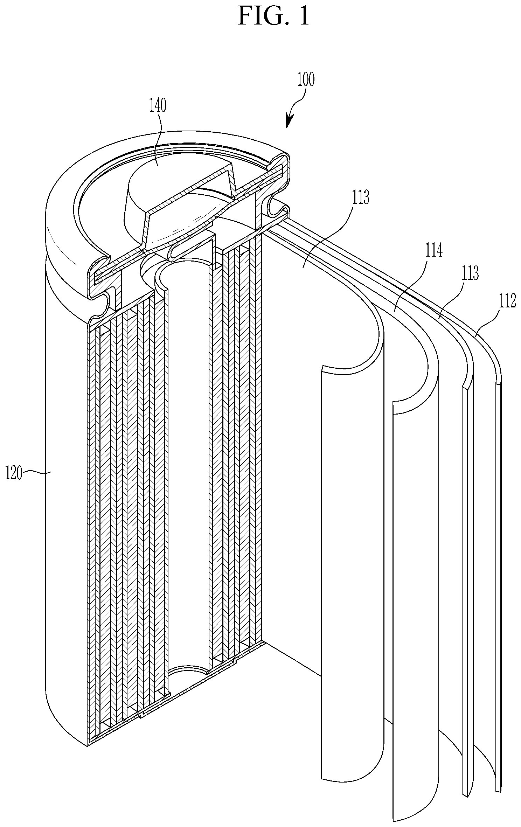

FIG. 1 is a schematic view illustrating a non-aqueous electrolyte rechargeable battery according to an embodiment.

## DETAILED DESCRIPTION OF THE EMBODIMENTS

Hereinafter, a specific configuration of a non-aqueous electrolyte rechargeable battery according to an embodiment will be described.

<1. Basic Configuration of Non-aqueous Electrolyte Rechargeable Battery>

The non-aqueous electrolyte rechargeable battery according to the present embodiment is a rechargeable lithium ion battery including a positive electrode, a negative electrode, a separator, and a non-aqueous electrolyte.

The shape of the rechargeable lithium ion battery is not particularly limited, but may be, for example, a cylindrical shape, a prismatic shape, a laminated shape, or a button shape.

Hereinafter, a non-aqueous electrolyte rechargeable battery according to an embodiment will be described with reference to FIG. 1. FIG. 1 is a schematic view illustrating a non-aqueous electrolyte rechargeable battery according to an embodiment. Referring to FIG. 1, a rechargeable lithium battery 100 according to an embodiment of the present invention includes a battery cell including a positive electrode 114, a negative electrode 112 facing the positive electrode 114, a separator 113 between the positive electrode 114 and the negative electrode 112, and an electrolyte (not shown) for a rechargeable lithium battery impregnating the positive electrode 114, negative electrode 112, and separator 113, a battery case 120 housing the battery cell, and a sealing member 140 sealing the battery case 120.

(1-1. Positive Electrode)

The positive electrode includes a positive electrode current collector and a positive electrode mixture layer formed on the positive electrode current collector.

The positive electrode current collector may be any material as long as it is a conductor, and is, for example, plate-shaped or thin, and may be desirably made of aluminium, stainless steel, nickel coated steel, or the like.

The positive electrode mixture layer may include at least a positive electrode active material, and may further include a conductive agent and a positive electrode binder.

The positive electrode active material may be, for example, a transition metal oxide or a solid solution oxide including lithium, and is not particularly limited as long as it can electrochemically intercalate and deintercalate lithium ions. Examples of the transition metal oxide including lithium may include $Li_{1.0}Ni_{0.88}Co_{0.1}Al_{0.01}Mg_{0.01}O_2$, etc. In addition, Li·Co composite oxides such as $LiCoO_2$ and Li·Ni·Co-Mn-based composite oxides such as $LiNi_xCo_yMn_zO_2$, Li-Ni-based composite oxide such as $LiNiO_2$, or Li-Mn-based composite oxides such as $LiMn_2O_4$, and the like. Examples of the solid solution oxide may include $Li_aMn_xCo_yNi_zO_2$ ($1.150 \leq a \leq 1.430$, $0.45 \leq x \leq 0.6$, $0.10 \leq y \leq 0.15$, $0.20 \leq z \leq 0.28$), $LiMn_{1.5}Ni_{0.5}O_4$. On the other hand, a content (content ratio) of the positive electrode active material is not particularly limited, as long as it is applicable to the positive electrode mixture layer of a non-aqueous electrolyte rechargeable battery. Moreover, these compounds may be used alone or may be used in mixture of plural types.

The conductive agent is not particularly limited as long as it is for increasing the conductivity of the positive electrode. Specific examples of the conductive agent may include those including at least one selected from among carbon black, natural graphite, artificial graphite, fibrous carbon, and sheet-like carbon.

Examples of the carbon black may include furnace black, channel black, thermal black, ketjen black, and acetylene black.

Examples of the fibrous carbon may include carbon nanotubes and carbon nanofibers, and examples of the sheet-like carbon include graphene and the like.

A content of the conductive agent is not particularly limited, and any content applicable to the positive electrode mixture layer of a non-aqueous electrolyte rechargeable battery may be used.

The positive electrode binder may include, for example, a fluoro-containing resin such as polyvinylidene fluoride, an ethylene-containing resin such as styrene-butadiene rubber, an ethylene-propylene diene terpolymer, an acrylonitile-butadiene rubber, a fluoro rubber, polyvinyl acetate, polymethylmethacrylate, polyethylene, polyvinyl alcohol, carboxymethyl cellulose, a carboxymethyl cellulose derivative (a salt of carboxymethyl cellulose, etc.), nitrocellulose, and the like. The positive electrode binder may be any material capable of binding the positive electrode active material and the conductive agent onto the positive electrode current collector, and is not particularly limited.

(1-2. Negative Electrode)

A negative electrode includes a negative electrode current collector and a negative electrode mixture layer formed on the negative current collector.

The negative electrode current collector may be anything as long as it is a conductor, and may be desirably plate-shaped or thin, and made of copper, stainless steel, nickel-plated steel, or the like.

The negative electrode mixture layer may include at least a negative electrode active material, and may further include a conductive agent and a negative electrode binder.

The negative electrode active material is not particularly limited as long as it can electrochemically intercalate and deintercalate lithium ions, but, may be, for example, a graphite active material (artificial graphite, natural graphite, a mixture of artificial graphite and natural graphite, natural graphite coated with artificial graphite), a Si-based active material, or a Sn-based active material (e.g., a mixture of fine particles of silicon (Si) or tin (Sn) or a mixture of oxides thereof and a graphite active material, particulates of silicon or tin, an alloy including silicon or tin as a base material), metallic lithium, a titanium oxide compound such as $Li_4Ti_5O_{12}$, lithium nitride, and the like. As the negative electrode active material, one of the above examples may be used, or two or more types may be used in combination. On the other hand, oxides of silicon may be represented by $SiO_x$ ($0 < x \leq 2$).

The conductive agent is not particularly limited as long as it is for increasing the conductivity of the negative electrode, and, for example, the same conductive agent as described in the positive electrode section may be used.

The negative electrode binder may be one capable of binding the negative electrode active material and the conductive agent on the negative current collector, and is not particularly limited. The negative electrode binder may be, for example, polyvinylidene fluoride (PVDF), polytetrafluoroethylene (PTFE), polyacrylic acid (PAA), a styrene-butadiene-based copolymer (SBR), a metal salt of carboxymethyl cellulose (CMC), etc. The binder may be used alone or may be used in mixture of two or more types.

(1-3. Separator)

The separator is not particularly limited, and any separator may be used as long as it is used as a separator for a rechargeable lithium ion battery. The separator may be a porous film, nonwoven fabric, or the like that exhibits excellent high-rate discharge performance alone or in combination. The resin constituting the separator may be, for example, a polyolefin-based resin such as polyethylene, polypropylene, etc., a polyester resin such as polyethylene terephthalate, polybutylene terephthalate, etc., polyvinylidene difluoride, a vinylidene difluoride-hexafluoropropylene copolymer, a vinylidene difluoride-perfluorovinyl ether copolymer, a vinylidene difluoride-tetrafluoroethylene copolymer, a vinylidene difluoride-trifluoroethylene copolymer, a vinylidene difluoride-fluoroethylene copolymer, a vinylidene difluoride-hexafluoroacetone copolymer, a vinylidene difluoride-ethylene copolymer, a vinylidene difluoride-propylene copolymer, a vinylidene difluoride-trifluoro propylene copolymer, a vinylidene difluoride-tetrafluoroethylene copolymer, a vinylidene difluoride-ethylene-tetrafluoroethylene copolymer, or the like. On the other hand, a porosity of the separator is not particularly limited, and it is possible to arbitrarily apply a porosity of the separator of a conventional rechargeable lithium ion battery.

The separator may further include a surface layer covering the surface of the porous film or non-woven fabric described above. The surface layer may include an adhesive for immobilizing the battery element by adhering to the electrode. Examples of the adhesive may include a vinylidene fluoride-hexafluoropropylene copolymer, an acid-modified product of vinylidene fluoride polymers, and a styrene-(meth)acrylic acid ester copolymer.

(1-4. Non-aqueous Electrolyte)

As the non-aqueous electrolyte, the same non-aqueous electrolyte that has conventionally been used for rechargeable lithium ion batteries may be used without particular limitation. The non-aqueous electrolyte has a composition in which an electrolyte salt is included in a non-aqueous solvent, which is a solvent for the electrolyte. Examples of the non-aqueous solvent may include cyclic carbonate esters such as propylene carbonate, ethylene carbonate, butylene carbonate, chloroethylene carbonate, fluoroethylene carbonate, and vinylene carbonate, cyclic esters such as $\gamma$-butyrolactone and $\gamma$-valerolactone, chain carbonates such as dimethyl carbonate, diethyl carbonate, or ethylmethyl carbonate, chain esters such as methylformate, methylacetate, methylbutyrate, ethyl propionate, propyl propionate, ethers such as tetrahydrofuran or a derivative thereof, 1,3-dioxane, 1,4-dioxane, 1,2-dimethoxyethane, 1,4-dibutoxyethane, or methyldiglyme, ethylene glycol monopropyl ether, or propylene glycol monopropyl ether, nitriles such as acetonitrile and benzonitrile, dioxolane or a derivative thereof, ethylene sulfide, sulfolane, sultone, or a derivative thereof, which may be used alone or in a mixture of two or more. On the other hand, when two or more types of non-aqueous solvents are mixed and used, a mixing ratio of each non-aqueous solvent may be a mixing ratio that may be used in a conventional rechargeable lithium ion battery.

Examples of the electrolyte salt may include an inorganic ion salt including one of lithium (Li), sodium (Na), or potassium (K) such as $LiClO_4$, $LiBF_4$, $LiAsF_6$, $LiPF_6$, $LiPF_{6-x}(C_nF_{2n+1})_x$ [provided that 1<x<6, n=1 or 2], LiSCN, LiBr, Lil, $Li_2SO_4$, $Li_2B_{10}Cl_{10}$, $NaClO_4$, Nal, NaSCN, NaBr, $KClO_4$, or KSCN, or an organic ion salt such as $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $(CH_3)_4NBF_4$, $(CH_3)_4NBr$, $(C_2H_5)_4NClO_4$, $(C_2H_5)_4NI$, $(C_3H_7)_4NBr$, $(n-C_4H_9)_4NClO_4$, $(n-C_4H_9)_4NI$, $(C_2H_5)_4N$-maleate, $(C_2H_5)_4N$-benzoate, $(C_2H_5)_4N$-phthalate, lithium stearyl sulfonate, lithium octyl sulfonate, lithium dodecylbenzene sulfonate, and the like, and it is also possible to use these ionic compounds alone or in a mixture of two or more types. Meanwhile, a concentration of the electrolyte salt may be the same as that of a non-aqueous electrolyte used in a conventional rechargeable lithium ion battery, and is not particularly limited. In an embodiment, it is desirable to use a non-aqueous electrolyte containing the above-described lithium compound (electrolyte salt) at a concentration of greater than or equal to about 0.8 mol/L and less than or equal to about 1.5 mol/L.

Meanwhile, various additives may be added to the non-aqueous electrolyte. Examples of such additives may include negative electrode-acting additives, positive electrode-acting additives, ester additives, carbonate ester additives, sulfuric acid ester additives, phosphoric acid ester additives, boric acid ester additives, acid anhydride additives, and electrolyte additives. One of these may be added to the non-aqueous electrolyte, and a plurality of types of additives may be added.

<2. Characteristic Configuration of Non-aqueous Electrolyte Rechargeable Battery According to an Embodiment >

Hereinafter, the characteristic configuration of the non-aqueous electrolyte rechargeable battery according to an embodiment will be described.

The positive electrode mixture layer of the non-aqueous electrolyte rechargeable battery according to the present embodiment includes endothermic particles in addition to the aforementioned components.

These endothermic particles include a metal hydroxide capable of absorbing heat through an endothermic reaction.

The metal hydroxide is not particularly limited as long as it can cause an endothermic reaction, and examples thereof may include aluminium hydroxide, pseudo-boehmite, boehmite, alumina, or kaolinite. These may be used alone or may be used together and may be commercially available .

On the other hand, an average primary particle diameter of the endothermic particles may be desirably greater than or equal to about 0.05 $\mu$m and less than or equal to about 50 $\mu$m, and more desirably greater than or equal to about 0.1 $\mu$m and less than or equal to about 10 $\mu$m.

The endothermic particles according to the present embodiment are made of metal hydroxide particles at least partially modified by carbon-containing functional groups, and the specific surface area and degree of modification by carbon-containing functional groups of the endothermic particles are within the following ranges.

The specific surface area (referred to as BET1) calculated from the adsorption isotherm measured by adsorbing water vapor to the endothermic particles may be greater than or equal to about 8 $m^2$/g and less than or equal to about 600 $m^2$/g, and at the same time the specific surface area (referred to as BET2) calculated from the adsorption isotherm measured by adsorbing nitrogen to the metal hydroxide particles may be greater than or equal to about 8 $m^2$/g and less than or equal to about 600 $m^2$/g.

The BET1 may be greater than or equal to about 10 $m^2$/g and less than or equal to about 400 $m^2$/g, or greater than or equal to about 12 $m^2$/g and less than or equal to about 210 $m^2$/g.

The BET2 may be greater than or equal to about 9 $m^2$/g and less than or equal to about 400 $m^2$/g, or greater than or equal to about 10 $m^2$/g and less than or equal to about 200 $m^2$/g.

Further, the specific surface area ratio (BET1/BET2), which is the ratio between BET1 and BET2, may be greater than or equal to about 0.2 and less than or equal to about 4.0, or greater than or equal to about 1.0 and less than or equal to about 3.5.

The carbon-containing functional group may be mainly a $CH_3$ group and a $CH_2OH$ group. The degree of modification by the carbon-containing functional groups may be defined by an amount (desorption amount) of gas desorbed from the endothermic particles when the endothermic particles are heated from about 80 °C to about 1400 °C, and the desorption amount of the following various gases derived from the above-mentioned functional group satisfies the following range.

The amount of desorbed $CH_4$ (referred to as MS1) may be greater than or equal to about $15 \times 10^{-6}$ mol/g and less than or equal to about $3000 \times 10^{-6}$ mol/g; the amount of desorbed CHsOH (referred to as MS2) may be greater than or equal to about $15 \times 10^{-6}$ mol/g and less than or equal to about $6000 \times 10^{-6}$ mol/g (for example, greater than or equal to about $50 \times 10^{-6}$ mol/g and less than or equal to about $6000 \times 10^{-6}$ mol/g); and the amount of desorbed $H_2O$ (referred to as MS3) may be greater than or equal to about $30 \times 10^{-6}$ mol/g and less than or equal to about $1500 \times 10^{-6}$ mol/g.

The MS1 may be greater than or equal to about $20 \times 10^{-6}$ mol/g or greater than or equal to about $30 \times 10^{-6}$ mol/g.

The MS2 may be greater than or equal to about $100 \times 10^{-6}$ mol/g, or greater than or equal to about $200 \times 10^{-6}$ mol/g.

The MS3 may be greater than or equal to about $50 \times 10^{-6}$ mol/g and less than or equal to about $1000 \times 10^{-6}$ mol/g, or greater than or equal to about $100 \times 10^{-6}$ mol/g and less than or equal to about $750 \times 10^{-6}$ mol/g.

Further, a ratio of these desorbed amounts $\{(MS1 + MS2)/MS3\}$ may be greater than or equal to about 1.0 and less than or equal to about 10.0, greater than or equal to about 2.0 and less than or equal to about 9.0, or greater than or equal to about 2.5 and less than or equal to about 8.0.

In addition, when the endothermic particles are modified with phosphonic acid, a fire extinguishing function may be imparted to the endothermic particles.

Therefore, the amount of desorbed $P_2$ (referred to as MS4) from about 80 °C to about 1400 °C by TDS-MS of the endothermic particles may be greater than or equal to about $5 \times 10^{-6}$ mol/g and less than or equal to about $5000 \times 10^{-6}$ mol/g, greater than or equal to about $20 \times 10^{-6}$ mol/g and less than or equal to about $3000 \times 10^{-6}$ mol/g, or greater than or equal to about $40 \times 10^{-6}$ mol/g and less than or equal to about $1000 \times 10^{-6}$ mol/g.

Further, when the endothermic particles are modified with a functional group containing a phenyl group, it is easy to disperse the metal hydroxide particles in a solvent when preparing a slurry such as a positive electrode mixture slurry.

Therefore, the amount of desorbed $C_6H_6$ (referred to as MS5) about 80 °C to about 1400 °C by TDS-MS of the endothermic particles may be greater than or equal to about $10 \times 10^{-6}$ mol/g and less than or equal to about $5000 \times 10^{-6}$ mol/g, greater than or equal to about $20 \times 10^{-6}$ mol/g and less than or equal to about $3000 \times 10^{-6}$ mol/g, or greater than or equal to about $40 \times 10^{-6}$ mol/g and less than or equal to about $1500 \times 10^{-6}$ mol/g.

The total content of the modifying molecules contained in the endothermic particles may be in the range of greater than or equal to about 10 wt% and less than or equal to about 90 wt%, greater than or equal to about 20 wt% and less than or equal to about 80 wt%, or greater than or equal to about 30 wt% and less than or equal to about 70 wt%, when the total amount of the endothermic particles is 100 wt%.

The content of endothermic particles for a non-aqueous electrolyte rechargeable battery in the positive electrode mixture layer may be in the range of greater than or equal to about 0.05 wt% and less than or equal to about 10.0 wt%, greater than or equal to about 0.1 wt% and less than or equal to about 5.0 wt%, or greater than or equal to about 0.5 wt% and less than or equal to about 2.0 wt% based on the total weight, 100 wt%, of the positive electrode mixture layer.

The content of the endothermic particles for the non-aqueous electrolyte rechargeable battery based on the total weight, 100 wt%, of the non-aqueous electrolyte rechargeable battery may be different depending on the use of the non-aqueous electrolyte rechargeable battery and thus is not limited to the following range. However, for example, the content of endothermic particles for the non-aqueous electrolyte rechargeable battery included in the non-aqueous electrolyte rechargeable battery may be in the range of greater than or equal to about 0.01 wt% and less than or equal to about 10.0 wt%, for example, greater than or equal to about 0.01 wt% and less than or equal to about 5.0 wt%, greater than or equal to about 0.02 wt% and less than or equal to about 2.0 wt%, or greater than or equal to about 0.1 wt% and less than or equal to about 0.5 wt% based on the total weight, 100 wt%, of the non-aqueous electrolyte rechargeable battery.

<3. Manufacturing Method of Non-aqueous Electrolyte Rechargeable Battery According to an Embodiment>

Hereinafter, the manufacturing method of a rechargeable lithium ion battery is described.

The endothermic particles for the non-aqueous electrolyte rechargeable battery according to the present embodiment may be produced by modifying metal hydroxide particles made of metal hydroxide.

Examples of the method for modifying the metal hydroxide particles may include a method of immersing the metal hydroxide particles in a modifier (e.g. a surface modifier or surface treatment agent) for a predetermined period of time.

Examples of the surface modifier include a silane coupling agent, a titanate coupling agent, an aluminate coupling agent, a fatty acid surface treatment agent (for example, higher fatty acid surface treatment agent having C10 to C60 carbon atoms), and phosphonic acid (such as phosphonic acid and phenylphosphonic acid).

By immersing the metal hydroxide particles in these modifiers, the surface of the metal hydroxide particles are modified with functional groups derived from these modifiers. At this time, the modifiers may be penetrated inside the metal hydroxide particles and thus functional groups derived from these modifiers may be present inside the particles in addition to the surface thereof.

The positive electrode is produced as follows. First, a positive electrode slurry is formed by dispersing a mixture of a positive electrode active material, a conductive agent, a positive electrode binder, and endothermic particles for a non-aqueous electrolyte rechargeable battery in a desired ratio in a solvent for a positive electrode slurry. Next, this positive electrode slurry is coated on the positive electrode current collector and dried to form a positive electrode mixture layer. On the other hand, the coating method is not particularly limited. The coating method may include a knife coater method, a gravure coater method, a reverse roll coater method, a slit die coater method, and the like. Each of the following coating processes is also performed by the same method. Subsequently, the positive electrode material mixture layer is pressed by a press to have a desired density. Thus, a positive electrode is manufactured.

The negative electrode is also produced in the same way as the positive electrode. First, a negative electrode slurry is prepared by dispersing a mixture of materials constituting the negative electrode mixture layer in a solvent for a negative electrode slurry. Next, a negative electrode mixture layer is formed by coating the negative electrode slurry on the negative electrode current collector and drying it. Next, the negative electrode material mixture layer is pressed by a press machine so as to have a desired density. Thus, a negative electrode is manufactured.

Next, an electrode structure is manufactured by placing a separator between the positive electrode and the negative electrode. Then, the electrode structure may be processed into a desired shape (e.g., cylindrical shape, prismatic shape, laminated shape, button shape, etc.) and inserted into a container of the above shape. Subsequently, a non-aqueous electrolyte is inserted into the corresponding container to impregnate the electrolyte into each pore in the separator or a gap between the positive and negative electrodes. Accordingly, a rechargeable lithium ion battery is manufactured.

<4. Effect by the Present Embodiment>

According to the non-aqueous electrolyte rechargeable battery structured as described above, an increase in the internal temperature of the battery may be sufficiently suppressed even in an abnormal state. As a result, the safety of the non-aqueous electrolyte rechargeable battery may be ensured, and at the same time, battery characteristics such as cycle life may be maintained high.

<5. Another Embodiment>

The present disclosure is not limited to the aforementioned embodiment.

In the aforementioned embodiment, the case where the positive electrode includes the endothermic particles for the non-aqueous electrolyte rechargeable battery according to the present disclosure has been described, but the negative electrode may include the endothermic particles for the non-aqueous electrolyte rechargeable battery, or the separator or electrolyte may include the endothermic particles for the non-aqueous electrolyte rechargeable battery.

When the negative electrode includes the endothermic particles for the non-aqueous electrolyte rechargeable battery, the content of the endothermic particles for the non-aqueous electrolyte rechargeable battery with respect to the entire negative electrode may be in the same range as that of the positive electrode. When the separator includes the endothermic particles for the non-aqueous electrolyte rechargeable battery, the content of the endothermic particles for the non-aqueous electrolyte rechargeable battery may be greater than or equal to about 0.5 wt% and less than or equal to about 20.0 wt% when the total weight of the separator is 100 wt%. When the electrolyte includes the endothermic particles for the non-aqueous electrolyte rechargeable battery, the content of the endothermic particles for the non-aqueous electrolyte rechargeable battery is in the range of greater than or equal to about 0.1 wt% and less than or equal to about 10.0 wt% when the total mass of the electrolyte is 100 wt%. On the other hand, when the separator or the electrolyte includes the endothermic particles, the average primary particle diameter of the endothermic particles may be greater than or equal to about 0.1 $\mu$m and less than or equal to about 10 $\mu$m.

In addition, the present invention is not limited to these embodiments but may be various modified without deviating from the purpose.

[Examples]

Hereinafter, the present invention will be described in more detail according to specific examples. However, the following examples are only one example of the present invention, and the present invention is not limited to the following examples.

<Production of Endothermic Particles for Non-aqueous Electrolyte Rechargeable Battery>

Herein, metal hydroxide particles used in each example had an average primary particle diameter of greater than or equal to 5 $\mu$m and less than or equal to 12 $\mu$m.

(Example 1)

Modified aluminium hydroxide particles (A) were obtained by dissolving 3.0 g of triethoxyvinylsilane in 50 cm$^3$ of a mixed solution of ethanol and purified water (a volume mixing ratio of 1 : 1) to prepare a treatment solution, dispersing 1.0 g of aluminium hydroxide particles (BET1 : 205 m$^2$/g, BET2 : 200 m$^2$/g, manufactured by Iwatani Chemical Industry Co., Ltd.) in the treatment solution, and then, performing a heat treatment at 80 °C for 4 hours and vacuum-drying.

(Example 2)

Modified activated alumina particles (A) were obtained by dissolving 3.0 g of triethoxyvinylsilane in 50 cm$^3$ of a mixed solution of ethanol and purified water (a volume mixing ratio of 1 : 1) to prepare a treatment solution, dispersing 1.0 g of activated alumina particles (BET1 : 300 m$^2$/g, BET2 : 270 m$^2$/g, manufactured by Iwatani Chemical Industry Co., Ltd.) in the treatment solution, and then, performing a heat treatment at 80 °C for 4 hours and vacuum-drying.

(Example 3)

Modified pseudo-boehmite particles (A) were obtained in the same manner as in Example 1 except that 1.0 g of pseudo-boehmite particles (BET1 : 407 m$^2$/g, BET2 : 377 m$^2$/g, manufactured by CIS Chemical Co., Ltd.) were dispersed in a treatment solution prepared by dissolving 3.0 g of p-styryltrimethoxysilane in 50 cm$^3$ of a mixed solution of ethanol and purified water (a volume mixing ratio of 1 : 1).

(Example 4)

Modified magnesium hydroxide particles (A) were obtained in the same manner as in Example 1 except that 1.0 g of magnesium hydroxide particles (BET1 : 160 m$^2$/g, BET2 : 150 m$^2$/g, manufactured by Iwatani Chemical Industry Co., Ltd.) were dispersed in a treatment solution prepared by dissolving 3.0 g of 3-acryloxypropyltrimethoxysilane in 50 cm$^3$ of a mixed solution of ethanol and purified water (a volume mixing ratio of 1 : 1).

(Example 5)

Modified kaolinite particles (A) were obtained in the same manner as in Example 1 except that 1.0 g of kaolinite particles ($Al_2Si_2O_5(OH)_4$, BET1 : 120 m$^2$/g, BET2 : 110 m$^2$/g, manufactured by Iwatani Chemical Industry Co., Ltd.) were dispersed in a treatment solution prepared by dissolving 3.0 g of 3-aminopropyltrimethoxysilane in 50 cm$^3$ of a mixed solution of ethanol and purified water (a volume mixing ratio of 1 : 1).

(Example 6)

Modified pseudo-boehmite particles (B) were obtained in the same manner as in Example 1 except that 1.0 g of pseudo-boehmite particles (BET1 : 407 m$^2$/g, BET2 : 377 m$^2$/g) were dispersed in a treatment solution prepared by dissolving 0.3 g of p-styryltrimethoxysilane in 50 cm$^3$ of a mixed solution of ethanol and purified water (a volume mixing ratio of 1 : 1).

(Example 7)

Modified pseudo-boehmite particles (C) were obtained in the same manner as in Example 1 except that 1.0 g of pseudo-boehmite particles (BET1 : 407 m$^2$/g, BET2 : 377 m$^2$/g, manufactured by CIS Chemical Co., Ltd.) were dispersed in a treatment solution prepared by dissolving 3.0 g of isopropyltriisostearoyltitanate in 50 cm$^3$ of a mixed solution of ethanol and purified water (a volume mixing ratio of 1 : 1).

(Example 8)

Modified pseudo-boehmite particles (D) were obtained in the same manner as in Example 1 except that 1.0 g of pseudo-boehmite particles (BET1 : 407 m$^2$/g, BET2 : 377 m$^2$/g, manufactured by CIS Chemical Co., Ltd.) were dispersed in a treatment solution prepared by dissolving 3.0 g of sodium stearate in 50 cm$^3$ of a mixed solution of ethanol and purified water (a volume mixing ratio of 1 : 1).

(Example 9)

Modified pseudo-boehmite particles (E) were obtained in the same manner as in Example 1 except that 1.0 g of pseudo-boehmite particles (BET1 : 407 m$^2$/g, BET2 : 377 m$^2$/g, manufactured by CIS Chemical Co., Ltd.) were dispersed in a treatment solution prepared by dissolving 5.0 g of phenylphosphonic acid in 50 cm$^3$ of a mixed solution of ethanol and purified water (a volume mixing ratio of 1 : 1).

(Example 10)

Modified pseudo-boehmite particles (F) were obtained in the same manner as in Example 1 except that 1.0 g of pseudo-boehmite particles (BET1 : 407 m$^2$/g, BET2 : 377 m$^2$/g, manufactured by CIS Chemical Co., Ltd.) were dispersed in a treatment solution prepared by dissolving 3.0 g of phenylphosphonic acid in 50 cm$^3$ of a mixed solution of ethanol and purified water (a volume mixing ratio of 1 : 1).

(Comparative Examples 2 to 8)

Endothermic particles described in Table 1 was used.

(Table 1)

|  | Endothermic particles | Sample name, Manufacturer |
| --- | --- | --- |
| Comparative Example 2 | aluminum hydroxide particles 1 | RA-40, Iwatani Chemical Industry Co., Ltd. |
| Comparative Example 3 | aluminum hydroxide particles 2 | RH40, Iwatani Chemical Industry Co., Ltd. |
| Comparative Example 4 | magnesium hydroxide particles 1 | ECOMAG™ Z-10, Tateho Chemical Industries Co., Ltd. |
| Comparative Example 5 | magnesium hydroxide particles 2 | MTK-30, Iwatani Chemical Industry Co., Ltd. |
| Comparative Example 6 | kaolinite particles | Kaolinite, Sigma-Aldrich Chemical |
| Comparative Example 7 | pseudo-boehm ite particles | PB-R, CIS Chemical Co., Ltd. |
| Comparative Example 8 | boehmite particles | BG-601, Anhui Estone Materials Technology Co., Ltd. |

(Examples 11 to 13)

Modified pseudo-boehmite particles (G) were obtained in the same manner as in Example 1 except that 1.0 g of pseudo-boehmite particles (BET1 : 407 m$^2$/g, BET2 : 377 m$^2$/g, manufactured by CIS Chemical Co., Ltd.) were dispersed in a treatment solution prepared by dissolving 1.0 g of phenylphosphonic acid in 50 cm$^3$ of a mixed solution of ethanol and purified water (a volume mixing ratio of 1 : 1).

(Comparative Example 9)

Modified aluminium hydroxide particles (B) were obtained in the same manner as in Example 1 except that 1.0 g of aluminium hydroxide particles (BET1 : 3.3 m$^2$/g, BET2 : 3.2 m$^2$/g, manufactured by Iwatani Chemical Industry Co., Ltd.) were dispersed in a treatment solution prepared by dissolving 3.0 g of p-styryltrimethoxysilane in 50 cm$^3$ of a mixed solution of ethanol and purified water (a volume mixing ratio of 1 : 1).

(Comparative Example 10)

Modified magnesium hydroxide particles (B) were obtained in the same manner as in Example 1 except that 1.0 g of magnesium hydroxide particles (BET1 : 2.0 m$^2$/g, BET2 : 2.4 m$^2$/g, manufactured by Iwatani Chemical Industry Co., Ltd.) were dispersed in a treatment solution prepared by dissolving 3.0 g of p-styryltrimethoxysilane in 50 cm$^3$ of a mixed solution of ethanol and purified water (a volume mixing ratio of 1 : 1).

(Comparative Example 11)

Modified boehmite particles (B) were obtained in the same manner as in Example 1 except that 1.0 g of boehmite particles (BET1 : 15.2 m$^2$/g, BET2 : 10.1 m$^2$/g, manufactured by CIS Chemical Co., Ltd.) were dispersed in a treatment solution prepared by dissolving 3.0 g of p-styryltrimethoxysilane in 50 cm$^3$ of a mixed solution of ethanol and purified water (a volume mixing ratio of 1 : 1).

(Comparative Example 12)

Surface-modified pseudo-boehmite particles (H) were obtained in the same manner as in Example 1 except that 1.0 g of pseudo-boehmite particles (BET1 : 407 m$^2$/g, BET2 : 377 m$^2$/g, manufactured by CIS Chemical Co., Ltd.)

were dispersed in a treatment solution prepared by dissolving 0.05 g of phenylphosphonic acid in 50 cm$^3$ of a mixed solution of ethanol and purified water (a volume mixing ratio of 1 : 1).

<Manufacture of Positive Electrode>

(Examples 1 to 10 and Comparative Examples 2 to 12)

LiCoO$_2$, acetylene black, polyvinylidene fluoride, and each of the endothermic particles for a non-aqueous electrolyte rechargeable battery shown in Table 2 in a weight ratio of 97.0 : 1.0 : 1.3 : 0.7 were mixed and dispersed in an N-methyl-2-pyrrolidone solvent, preparing a positive electrode mixture slurry. Subsequently, the positive electrode mixture slurry was coated and dried on one surface or both surfaces of an aluminium current collector foil to have a coating amount of the mixture (surface density) of 20.0 mg/cm$^2$ per each surface after the drying and then, pressed with a roll press to have a mixture layer density of 4.15 g/cc, manufacturing each positive electrode.

(Examples 11 to 13 and Comparative Example 1)

Each positive electrode was manufactured in the same manner as in Example 1 except that the positive electrode mixture slurry was prepared by mixing and dispersing LiCoO$_2$, acetylene black, and polyvinylidene fluoride in a weight ratio of 97.7 : 1.0 : 1.3 in the N-methyl-2-pyrrolidone solvent.

<Manufacture of Negative Electrode>

(Examples 1 to 10 and 12 to 13 and Comparative Examples 1 to 12)

Artificial graphite, a carboxylmethyl cellulose sodium salt (CMC), and a styrene butadiene-based aqueous dispersed body in a weight ratio of 97.5 : 1.0 : 1.5 were dissolved and dispersed in a water solvent, preparing negative electrode mixture slurry. Subsequently, the negative electrode mixture slurry was coated and dried on one surface or both surfaces of a copper foil to have a coating amount of the mixture (surface density) of 10.5 mg/cm$^2$ per one surface after the drying and then, pressed with a roll press to have the mixture layer density of 1.65 g/cc, manufacturing a negative electrode.

(Example 11)

A negative electrode was manufactured in the same manner as in Example 1 except that the negative electrode mixture slurry was prepared by dissolving and dispersing artificial graphite, a carboxylmethyl cellulose sodium salt (CMC), a styrene butadiene-based aqueous dispersed body, and the endothermic particles for a non-aqueous electrolyte rechargeable battery shown in Table 2 in a weight ratio of 96.5 : 1.0 : 1.5 : 1.0 in a water solvent.

<Manufacture of Rechargeable Battery Cells>

(Examples 1 to 11 and Comparative Examples 1 to 12)

A plurality of the positive electrodes and a plurality of the negative electrode were stacked with a polypropylene porous separator between the positive and negative electrodes to have battery design capacity of 300 mAh, manufacturing an electrode stack. Subsequently, a rechargeable battery cell before the initial charge was manufactured by welding nickel and aluminium lead wires respectively to the negative and positive electrodes of the electrode stack, housing the electrode stack in an aluminium laminate film with the lead wires externally pulled out, injecting an electrolyte thereinto, and sealing the aluminium laminate film under a reduced pressure. The electrolyte was prepared by dissolving 1.3 M LiPF$_6$ and 1 wt% of vinylene carbonate in a mixed solvent of ethylene carbonate / dimethyl carbonate / fluoroethylene carbonate in a volume ratio of 15 / 80 / 5.

(Example 12)

30 parts by weight of the pseudo-boehmite particles (G) and 0.3 parts by weight of an ammonia polycarboxylic acid aqueous solution were mixed in 100 parts by weight of ion exchanged water and then, treated with bead mills to adjust an average particle diameter (D50) into 1.0 μm or less, preparing a uniform composition for forming an endothermic layer.
Subsequently, a rechargeable battery cell was manufactured in the same manner as in Example 1 except that a separator containing an endothermic layer was manufactured by applying the composition for forming an endothermic layer on the aforementioned polypropylene porous separator with a micro gravure coater and drying it at 80 °C to remove the ion exchanged water to form a 2 $\mu$m-thick surface layer including the pseudo-boehmite particles (G) on the polypropylene porous separator. On the other hand, a content of the endothermic particles included in the separator was 30 wt% based on a total amount of the separator.

(Example 13)

A rechargeable battery cell was manufactured in the same manner as in Example 1 except that the composition for forming an endothermic layer was prepared by using 5 parts by weight of the pseudo-boehmite particles (G) based on 100 parts by weight of a non-aqueous electrolyte with the same composition.

<Evaluation of Physical Properties of Endothermic Particles>

The endothermic particles for a non-aqueous electrolyte rechargeable battery used in the examples and the comparative examples were evaluated as follows.

(Specific Surface Area (BET) of Endothermic Particles)

A gas adsorption amount measuring device (BELSORP, Microtrac·Bell Co., Ltd.) was used to measure a specific surface area of each endothermic particle (BET (BET 1 or BET2), which is a specific surface area calculated by an adsorption isotherm measured by adsorbing water vapor or nitrogen) according to JIS K6217-2.

(Maximum Endothermic Peak of Endothermic Particles)

Each of the endothermic particles was measured with respect to a maximum endothermic peak temperature by using a differential scanning calorimetry device (DSC, Hitachi High-Tech Co., Ltd.) and increasing a temperature at 5 K/min according to JIS K7121. According to the embodiments, a maximum endothermic peak temperature of the endothermic particles is greater than or equal to about 60 °C and less than or equal to about 300 °C, for example, greater than or equal to about 120 °C and less than or equal to about 200 °C, or greater than or equal to about 130 °C and less than or equal to about 175 °C.

(Mass of Desorbed Gas of Endothermic Particles)

Temperature desorption mass spectrometry (TDS-MS) was conducted by using a thermal desorption gas mass spectrometer (TDS-1200, ESCO, Ltd.) to measure and analyze each desorbed amount of methane molecules, methanol molecules, benzene molecules, diphosphorus molecules, and water molecules, as follows.
In TDS, the endothermic particles were set by using a sample stage made of quartz and a sample dish made of SiC. In addition, the temperature increase rate was 60 °C/min. The temperature increase was controlled by monitoring a temperature on the sample surface. Furthermore, a weight of the sample was 1 mg, which was corrected by an actual weight. A quadruple mass spectrometer was used for a detection, and a voltage applied thereto was 1000 V.
TDS was used to measure an amount ($\mu$mol/g) of each gas desorbed from the endothermic particles during the temperature increase from 80 °C to 1400 °C. The mass number [M/z] used for analyzing the measurements was 15 for $CH_4$, 18 for $H_2O$, 31 for CHsOH, 62 for $P_2$, and 78 for $C_6H_6$, wherein gases corresponding to the mass numbers were all each of the aforementioned substances. Herein, regarding the gas amount of $H_2O$, an integrated value only from 80 °C to 200 °C out of the entire temperature range was used to obtain the desorbed $H_2O$ amount (MS3).

<Confirmation of Heat Generation at 150 °C or less under Coexistence of Endothermic Particles and Electrolyte>

After putting 2.0 mg of the endothermic particles and 0.5 mg of the same electrolyte as used to manufacture the rechargeable battery cells into a dedicated airtight container and caulking it, whether or not an exothermic peak was found at 150 °C or less was examined by checking an endothermic peak in the same method as the aforementioned method of measuring the maximum endothermic peak of the endothermic particles, wherein Comparative Examples 1 to 11 exhibited a clear exothermic peak around 100 °C, but Examples 1 to 13 exhibited no exothermic peak.

<Evaluation of Rechargeable Battery Cells>

(Cycle Characteristics)

The rechargeable battery cells according to Examples 1 to 13 and Comparative Examples 1 to 12 were charged under a constant current to 4.3 V at 0.1 CA of design capacity and charged under a constant voltage to 0.05 CA still at 4.3 V in a 25 °C thermostat. Subsequently, the cells were discharged under a constant current to 3.0 V at 0.1 CA. In addition, the cells were measured with respect to initial discharge capacity after the 1st cycle through a constant current charge at 0.2 CA, a constant voltage charge at 0.05 CA, and a constant current discharge at 0.2 CA under conditions of a charge cut-off voltage of 4.3 V and a discharge cut-off voltage of 3.0 V in the 25 °C thermostat. The rechargeable battery cells were 100 cycles charged and discharged through a constant current charge at 0.5 CA, a constant voltage charge at 0.05 CA, and a constant current discharge 0.5 CA under conditions of a charge cut-off voltage of 4.3 V and a discharge cut-off voltage of 3.0 V at 45 °C to test a cycle-life. After the 100 cycles, discharge capacity at a constant current charge of 0.2 CA, a constant voltage charge of 0.05 CA, and a discharge at 0.2 CA of the cells was measured and was divided by the initial discharge capacity to obtain capacity retention after the 100 cycles.

(Heating Test)

The rechargeable battery cells according to Examples 1 to 13 and Comparative Examples 1 to 12 were charged under a constant current to 4.42 V at design capacity of 0.1 CA and charged under a constant voltage at 4.42 V to 0.05 CA in the 25 °C thermostat. Subsequently, the cells were discharged to 3.0 V at 0.1 CA under a constant current. In addition, in the 25 °C thermostat, after performing a constant current charge at 0.2 CA, a constant voltage charge at 0.05 CA, and a constant current discharge at 0.2 CA under conditions of a charge cut-off voltage of 4.42 V and a discharge cut-off voltage of 3.0 V as 1 cycle, the cells were charged again under a constant current/constant voltage to 4.42 V, which were regarded as initial cells. These rechargeable battery cells were left for 1 hour in a thermostat heated to 165 °C, and a case where a voltage of a battery cell became 4.3 V or less was regarded as "abnormal occurrence," and an abnormal occurrence rate was evaluated in the 10 battery tests.

(Nail Penetration Test)

A nail penetration test was conducted by penetrating the aforementioned initial cells in the center with a nail (stainless steel or soft iron) having a diameter of 3 mm at 50 mm/s. A case where an external temperature of a battery cell reached 50 °C or higher 5 seconds after penetrated with the nail was regarded as "abnormal occurrence," and an abnormal occurrence rate was evaluated in the 10 battery tests.

(Overcharge Test)

A case where an external temperature of a battery cell reached 50 °C or higher after additionally charging the aforementioned initial cells under a constant current to 12 V at 3 CA and then, charging them under a constant voltage for 10 minutes after reaching 12 V was regarded as "abnormal occurrence," an abnormal occurrence rate was evaluated in the 10 battery tests.

(Experiment Results)

Table 2 shows types, physical properties, and locations of the endothermic particles used in the examples and the comparative examples described above.
In addition, the evaluation results of Examples 1 to 13 and Comparative Examples 1 to 12 are shown in Table 3.

(Table 2)

| | Endothermic particles | Thermal desorption gas mass | | | | | | Specific surface area | | | Maximum endothermic peak temperature (°C) | Location including endothermic particles |
|---|---|---|---|---|---|---|---|---|---|---|---|---|
| | | MS1 (µmol /g) | MS2 (µmol /g) | MS3 (µmol /g) | Desorption gas amount ratio (-) | MS4 (µmol/ g) | MS5 (µmol/ g) | BET1 (m$^2$/g) | BET2 (m$^2$/g) | Specific surface area ratio (-) | | |
| Ex. 1 | modified aluminium hydroxide particle A | 120 .2 | 1024 2 | 20 5. 2 | 5.6 | 0.0 | 0.2 | 45.5 | 35.4 | 1.3 | 155 | positive electrode |
| Ex. 2 | modified active alumina particle A | 198 .1 | 1055 3 | 31 7. 2 | 4.0 | 00 | 13 45.2 | 71.2 | 53.5 | 1.3 | 175 | positive electrode |
| Ex. 3 | modified pseudo-boehmite particle A | 205 .1 | 1542 5 | 40 5. 1 | 4.3 | 00 | 13 45.2 | 71.2 | 53.5 | 1.3 | 175 | positive electrode |
| Ex. 4 | modified magnesium hydroxide particle A | 130 .2 | 11 21. 4 | 19 8. 1 | 6.3 | 0.0 | 0.1 | 35.1 | 33.5 | 1.0 | 135 | positive electrode |
| Ex. 5 | modified kaolinite particle A | 125 .1 | 95 8 5 | 20 2. 6 | 5.3 | 00 | 13 80.5 | 68.5 | 50.2 | 1.4 | 140 | positive electrode |
| Ex. 6 | modified pseudo-boehmite particle B | 30. 5 | 32 4. 5 | 10 2. 1 | 3.5 | 00 | 12 4.5 | 20 7.5 | 190.8 | 1.1 | 150 | positive electrode |
| Ex. 7 | modified pseudo-boehmite particle C | 150 6 | 2012 3 | 27 0. 8 | 8.0 | 0.0 | 0.0 | 48 5 | 45.3 | 1.1 | 140 | positive electrode |
| Ex. 8 | modified pseudo-boehmite particle D | 245 5 | 3120 5 | 48 0. 2 | 7.0 | 0.0 | 0.0 | 42.5 | 43.5 | 1.0 | 130 | positive electrode |
| Ex. 9 | modified pseudo-boehmite particle E | 52. 5 | 49 6. 5 | 20 9. 6 | 2.6 | 42. 5 | 42. 1 | 20 5.5 | 198.4 | 1.0 | 160 | positive electrode |
| Ex. 10 | modified pseudo-boehmite particle F | 208 .8 | 1600 9 | 73 3. 8 | 2.5 | 98 6.6 | 14 73.4 | 66.1 | 50.7 | 1.3 | 160 | positive electrode |
| Ex. 11 | modified pseudo-boehmite particle G | 124 5 | 11510 | 31 8. 8 | 4.0 | 48 2.5 | 12 41.5 | 13 2.5 | 124.5 | 1.1 | 160 | negative electrode |
| Ex. 12 | modified pseudo-boehmite particle G | 124 5 | 11510 | 31 8. 8 | 4.0 | 48 2.5 | 12 41.5 | 13 2.5 | 124.5 | 1.1 | 160 | separator |

EP 4 276 932 A1

(continued)

| | Endothermic particles | Thermal desorption gas mass | | | | | | Specific surface area | | | Maximum endothermic peak temperature (°C) | Location including endothermic particles |
|---|---|---|---|---|---|---|---|---|---|---|---|---|
| | | MS1 (μmol/g) | MS2 (μmol/g) | MS3 (μmol/g) | Desorption gas amount ratio (-) | MS4 (μmol/g) | MS5 (μmol/g) | BET1 (m²/g) | BET2 (m²/g) | Specific surface area ratio (-) | | |
| Ex. 13 | modified pseudo-boehmite particle G | 124 5 | 1151 0 | 31 8.8 | 4.0 | 48 2.5 | 12 41.5 | 13 2.5 | 124.5 | 1.1 | 160 | electrolyte |
| Comp. Ex. 1 | | No addition | | | | | | | | | | |
| Comp. Ex. 2 | aluminium hydroxide particle 1 | 1.5 | 0.1 | 8.2 | 0.2 | 0.0 | 0.0 | 3.3 | 3.2 | 1.0 | 275 | positive electrode |
| Comp. Ex. 3 | aluminium hydroxide particle 2 | 6.7 | 5 1 | 14 25.2 | 0.01 | 0.0 | 0.0 | 20 5.0 | 200. 0 | 1.0 | 120 | positive electrode |
| Comp. Ex. 4 | magnesium hydroxide particle 1 | 1.8 | 0.1 | 8.9 | 0.2 | 00 | 0.0 | 2.0 | 2.4 | 0.8 | 420 | positive electrode |
| Comp. Ex. 5 | magnesium hydroxide particle 2 | 5.8 | 4.6 | 13 35.8 | 0.01 | 0.0 | 0.0 | 16 0.0 | 150. 0 | 1.1 | 130 | positive electrode |
| Comp. Ex. 6 | kaolinite particle | 3.2 | 0.4 | 15 2 | 0.2 | 0.0 | 0.1 | 11.2 | 8.6 | 1.3 | 510 | positive electrode |
| Comp. Ex. 7 | pseudo-boehmite particle | 9.4 | 2.5 | 18 85.4 | 0.01 | 0.0 | 0.2 | 40 7.0 | 377. 0 | 1.1 | 102 | positive electrode |
| Comp. Ex. 8 | boehmite particle | 2.1 | 3.2 | 7.5 | 0.7 | 0.0 | 0.2 | 15.2 | 10.1 | 1.5 | 480 | positive electrode |
| Comp. Ex. 9 | modified aluminum hydroxide particle B | 10.1 | 20.1 | 50 2 | 0.6 | 0.0 | 7.5 | 10.2 | 8.9 | 1.1 | 275 | positive electrode |
| Comp. Ex. 10 | modified magnesium hydroxide particle B | 8.8 | 18.5 | 45 3 | 0.6 | 0.0 | 6.8 | 9.5 | 9.0 | 1.1 | 420 | positive electrode |
| Comp. Ex. 11 | modified boehmite particle B | 11.1 | 15.5 | 52.1 | 0.5 | 0.0 | 8.1 | 23.5 | 20.1 | 1.2 | 480 | positive electrode |

| | Endothermic particles | Thermal desorption gas mass | | | | | | Specific surface area | | | Maximum endothermic peak temperature (°C) | Location including endothermic particles |
|---|---|---|---|---|---|---|---|---|---|---|---|---|
| | | MS1 (μmol/g) | M S 2 (μmol/g) | M S3 (μmol/g) | Desorption gas amount ratio (-) | M S4 (μmol/g) | M S5 (μmol/g) | BET1 (m²/g) | BET2 (m²/g) | Specific surface area ratio (-) | | |
| Comp. Ex. 12 | modified pseudo-boehmite particle H | 12. 2 | 30 2 | 16 25 . 2 | 0.0 3 | 2.1 | 3.6 | 35 0.1 | 281. 5 | 1.2 | 104 | positive electrode |

16

EP 4 276 932 A1

(Table 3)

|  | Heat Generation at 150 °C or less under coexistence of endothermic particles and electrolyte | Discharge capacity retention after 100 cycles (%) | Abnormal occurrence rate in heating test (%) | Abnormal occurrence rate in nail penetration test (%) | Abnormal occurrence rate in overcharge test (%) |
|---|---|---|---|---|---|
| Ex. 1 | None | 90.2 | 0 | 10 | 10 |
| Ex. 2 | None | 90.1 | 0 | 20 | 0 |
| Ex. 3 | None | 90.3 | 0 | 20 | 0 |
| Ex. 4 | None | 90.1 | 0 | 20 | 0 |
| Ex. 5 | None | 90.2 | 0 | 20 | 0 |
| Ex. 6 | None | 90.1 | 0 | 20 | 0 |
| Ex. 7 | None | 90.1 | 0 | 20 | 0 |
| Ex. 8 | None | 90.2 | 0 | 20 | 0 |
| Ex. 9 | None | 90.3 | 0 | 10 | 0 |
| Ex. 10 | None | 90.1 | 0 | 0 | 10 |
| Ex. 11 | None | 90.3 | 0 | 0 | 20 |
| Ex. 12 | None | 90.2 | 0 | 20 | 10 |
| Ex. 13 | None | 90.1 | 10 | 20 | 10 |
| Comp. Ex. 1 | Yes | 90.2 | 100 | 100 | 100 |
| Comp. Ex. 2 | Yes | 88.2 | 90 | 90 | 90 |
| Comp. Ex. 3 | Yes | 86.5 | 80 | 80 | 80 |
| Comp. Ex. 4 | Yes | 88.3 | 90 | 100 | 100 |
| Comp. Ex. 5 | Yes | 86.3 | 80 | 80 | 80 |
| Comp. Ex. 6 | Yes | 88.3 | 90 | 100 | 100 |
| Comp. Ex. 7 | Yes | 86.3 | 80 | 80 | 80 |
| Comp. Ex. 8 | Yes | 88.2 | 90 | 90 | 90 |
| Comp. Ex. 9 | Yes | 88.7 | 80 | 90 | 100 |
| Comp. Ex. 10 | Yes | 88.9 | 80 | 100 | 100 |
| Comp. Ex. 11 | Yes | 89.0 | 80 | 90 | 100 |
| Comp. Ex. 12 | Yes | 87.2 | 70 | 80 | 80 |

<Consideration of Examples and Comparative Examples>

Referring to the results of Table 3, the non-aqueous electrolyte rechargeable battery cells according to Examples 1 to 13, compared with the cells according to Comparative Examples 1 to 12, were significantly suppressed from the abnormal occurrence rate under various conditions increasing an internal temperature of the cells.

Comparative Examples 3, 5, and 7, although the endothermic particles for a non-aqueous electrolyte rechargeable battery shown in Table 2 had a specific surface area within a desirable range, exhibited an extremely high abnormal occurrence rate, as shown in Table 3, compared with Examples 1 to 13.

Referring to the results, in order to obtain endothermic particles for a non-aqueous electrolyte rechargeable battery having sufficient endothermic performance in a battery at a relatively low temperature of 200 °C or less, a modification degree by carbon-containing functional groups, which was found from an amount of desorbed gas shown in Table 2, as well as a specific surface area should be within a predetermined range.

One of the reasons for such results is that when endothermic particles having a high modification degree by carbon-containing functional groups may sufficiently secure an amount of metal hydroxide contributing to an endothermic reaction by suppressing a reaction between the metal hydroxide included in the endothermic particles with an electrolyte at an internal temperature increase of a battery.

Since non-aqueous electrolyte rechargeable batteries capable of exhibiting such performance have not been reported so far, as shown in Table 3, non-aqueous electrolyte rechargeable batteries capable of limiting the aforementioned abnormal occurrence rate to 20% or less and specifically, 10% or less, based on the aforementioned heating test, may be regarded as containing endothermic particles for a non-aqueous electrolyte rechargeable battery according to the present invention.

In addition, in the nail penetration test, the non-aqueous electrolyte rechargeable battery cells exhibiting an abnormal occurrence rate of 30% or less and specifically, 20% or less or in the overcharge test, the non-aqueous electrolyte rechargeable battery cells exhibiting an abnormal occurrence rate of 30% or less and specifically, 20% or less are also regarded as containing the endothermic particles for a non-aqueous electrolyte rechargeable battery according to the present invention.

In addition, the endothermic particles for a non-aqueous electrolyte rechargeable battery according to Examples 1 to 13 had a relatively large specific surface area and a maximum endothermic peak temperature of less than 200 °C. As a result, before an internal temperature of the non-aqueous electrolyte rechargeable battery cells reached 200 °C, an endothermic reaction occurred due to the endothermic particles for a non-aqueous electrolyte rechargeable battery, suppressing the internal temperature of a non-aqueous electrolyte rechargeable battery cell including the endothermic particles down to less than 200 °C, where the battery is not deteriorated.

In present disclosure, the average particle diameter (or size) may be measured by a method well suitable to those skilled in the art, for example, may be measured by a particle size analyzer, for example, HORIBA, LA-950 laser particle size analyzer, or may be measured by a transmission electron microscope (TEM) or a scanning electron microscope (SEM). In some embodiments, it is possible to obtain an average particle diameter value by measuring it utilizing a dynamic light scattering method, performing data analysis, counting the number of particles for each particle size range, and calculating from the data. In some embodiments, the average particle diameter (or size) may be measured by a microscope or a particle size analyzer and may refer to a diameter (D50) of particles having a cumulative volume of 50 volume% in a particle size distribution. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. Also, in the present disclosure, when particles are spherical, "diameter" indicates a particle diameter or an average particle diameter, and when the particles are non-spherical, the "diameter" indicates a major axis length or an average major axis length.

While this invention has been described in connection with what is presently considered to be practical example embodiments, it is to be understood that the invention is not limited to the disclosed embodiments. On the contrary, it is intended to cover various modifications and equivalent arrangements included within the scope of the appended claims.

**Claims**

1. Endothermic particles for a non-aqueous electrolyte rechargeable battery, being at least partially modified metal hydroxide particles,

   wherein an amount of desorbed $CH_4$ (MS1) from about 80 °C to about 1400 °C by thermal desorption gas mass spectrometry (TDS-MS) of the metal hydroxide particles is greater than or equal to about $15 \times 10^{-6}$ mol/g and less than or equal to about $3000 \times 10^{-6}$ mol/g,

an amount of desorbed CHsOH (MS2) from about 80 °C to about 1400 °C by TDS-MS is greater than or equal to about $15 \times 10^{-6}$ mol/g and less than or equal to about $6000 \times 10^{-6}$ mol/g,

an amount of desorbed $H_2O$ (MS3) from about 80 °C to about 200 °C by TDS-MS is greater than or equal to about $30 \times 10^{-6}$ mol/g and less than or equal to about $1500 \times 10^{-6}$ mol/g,

a specific surface area (BET1) calculated by the adsorption isotherm measured by adsorbing water vapor is greater than or equal to about 8 $m^2$/g and less than or equal to about 600 $m^2$/g, and

a specific surface area (BET2) of the metal hydroxide particles calculated by an adsorption isotherm measured by adsorbing nitrogen to the metal hydroxide particles is greater than or equal to about 8 $m^2$/g and less than or equal to about 600 $m^2$/g.

2.  The endothermic particles of claim 1, wherein
    a specific surface area ratio (BET1/BET2) of the endothermic particles satisfies Formula (1):

$$0.2 \le (BET1 / BET2) \le 4.0 \qquad (1).$$

3.  The endothermic particles of claim 1 or claim 2, wherein
    a desorption gas amount ratio {(MS1+ MS2)/MS3} of the endothermic particles satisfies Formula (2):

$$1.0 \le \{(MS1 + MS2) / MS3\} \le 10.0 \qquad (2).$$

4.  The endothermic particles of any one of claims 1 to 3, wherein
    an amount of desorbed $P_2$ of the endothermic particles from about 80 °C to about 1400 °C by TDS-MS is greater than or equal to about $5 \times 10^{-6}$ mol/g and less than or equal to about $5000 \times 10^{-6}$ mol/g.

5.  The endothermic particles of any one of claims 1 to 4, wherein
    an amount of desorbed $C_6H_6$ of the endothermic particles from about 80 °C to about 1400 °C by TDS-MS is greater than or equal to about $10 \times 10^{-6}$ mol/g and less than or equal to about $5000 \times 10^{-6}$ mol/g.

6.  The endothermic particles of any one of claims 1 to 5, wherein
    the metal hydroxide particle is modified with a surface treatment agent.

7.  The endothermic particles of claim 6, wherein
    the surface treatment agent includes a silane coupling agent, a titanate-based coupling agent, an aluminate-based coupling agent, a fatty acid surface treatment agent, a phosphonic acid, or a combination thereof.

8.  The endothermic particles of any one of claims 1 to 7, wherein
    a maximum endothermic peak temperature in the differential scanning calorimetry of the metal hydroxide particles is greater than or equal to about 60 °C and less than or equal to about 300 °C.

9.  The endothermic particles of any one of claims 1 to 8, wherein
    the metal hydroxide includes aluminium hydroxide, pseudo-boehmite, boehmite, alumina, kaolinite, or a combination thereof.

10. A non-aqueous electrolyte rechargeable battery, comprising

    a positive electrode, a negative electrode, a separator, and a non-aqueous electrolyte,
    wherein the positive electrode includes the endothermic particles for the non-aqueous electrolyte rechargeable battery of any one of claims 1 to 9 in a range of greater than or equal to about 0.01 wt% and less than or equal to about 10.0 wt% based on a total weight, 100 wt%, of the non-aqueous electrolyte rechargeable battery.

11. A non-aqueous electrolyte rechargeable battery, comprising

    a positive electrode, a negative electrode, a separator, and a non-aqueous electrolyte,
    wherein the negative electrode includes the endothermic particles for the non-aqueous electrolyte rechargeable battery of any one of claims 1 to 9 in a range of greater than or equal to about 0.01 wt% and less than or equal to about 10.0 wt% based on a total weight, 100 wt%, of the non-aqueous electrolyte rechargeable battery.

12. A non-aqueous electrolyte rechargeable battery, comprising

a positive electrode, a negative electrode, a separator, and a non-aqueous electrolyte,
wherein the separator includes the endothermic particles for the non-aqueous electrolyte rechargeable battery of any one of claims 1 to 9 in a range of greater than or equal to about 0.01 wt% and less than or equal to about 10.0 wt% based on a total weight, 100 wt%, of the non-aqueous electrolyte rechargeable battery.

13. A non-aqueous electrolyte rechargeable battery, comprising

a positive electrode, a negative electrode, a separator, and a non-aqueous electrolyte,
wherein the non-aqueous electrolyte includes the endothermic particles for the non-aqueous electrolyte rechargeable battery of any one of claims 1 to 9 in a range of greater than or equal to about 0.01 wt% and less than or equal to about 10.0 wt% based on a total weight, 100 wt%, of the non-aqueous electrolyte rechargeable battery.

# FIG. 1

Europäisches
Patentamt

European
Patent Office

Office européen
des brevets

# EUROPEAN SEARCH REPORT

Application Number

EP 23 16 5628

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2022 0004180 A (EVONIK OPERATIONS GMBH [DE]) 11 January 2022 (2022-01-11) | 1-9,12 | INV. H01M4/04 H01M4/62 |
| A | * paragraph [0041]; claims 1,4,5; examples * | 10,11,13 | H01M10/0525 H01M10/0567 |
| | ----- | | H01M50/403 |
| X | US 2017/358818 A1 (NAKAMURA AZUMI [JP] ET AL) 14 December 2017 (2017-12-14) | 1-9,13 | H01M50/409 H01M50/443 |
| A | * paragraph [0088]; claims 1,4-6; examples * | 10-12 | |
| | ----- | | |
| A | US 2012/288761 A1 (PARK HONG-KYU [KR] ET AL) 15 November 2012 (2012-11-15) * claim 1; examples 1-5,10 * | 1-13 | |
| | ----- | | |

TECHNICAL FIELDS
SEARCHED     (IPC)

H01M

The present search report has been drawn up for all claims

| Place of search | Date of completion of the search | Examiner |
|---|---|---|
| Munich | 6 October 2023 | Duval, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 5628

06-10-2023

| Patent document cited in search report | | Publication date | Patent family member(s) | | Publication date |
|---|---|---|---|---|---|
| KR 20220004180 | A | 11-01-2022 | CN | 113795974 A | 14-12-2021 |
| | | | EP | 3966881 A1 | 16-03-2022 |
| | | | JP | 2022531782 A | 11-07-2022 |
| | | | KR | 20220004180 A | 11-01-2022 |
| | | | TW | 202107751 A | 16-02-2021 |
| | | | US | 2022209361 A1 | 30-06-2022 |
| | | | WO | 2020225018 A1 | 12-11-2020 |
| US 2017358818 | A1 | 14-12-2017 | CN | 107112590 A | 29-08-2017 |
| | | | JP | 2016162528 A | 05-09-2016 |
| | | | US | 2017358818 A1 | 14-12-2017 |
| | | | WO | 2016136132 A1 | 01-09-2016 |
| US 2012288761 | A1 | 15-11-2012 | CN | 1918731 A | 21-02-2007 |
| | | | EP | 1711971 A1 | 18-10-2006 |
| | | | JP | 5132941 B2 | 30-01-2013 |
| | | | JP | 2007522619 A | 09-08-2007 |
| | | | KR | 20050079899 A | 11-08-2005 |
| | | | TW | I269477 B | 21-12-2006 |
| | | | US | 2005208380 A1 | 22-09-2005 |
| | | | US | 2012288761 A1 | 15-11-2012 |
| | | | WO | 2005076391 A1 | 18-08-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6925368 B
- JP 2016162528 A
- JP 4364940 B